**Europäisches Patentamt**

**European Patent Office**

**Office européen des brevets**

(19)

(11) Veröffentlichungsnummer: **0 020 960**
**B1**

(12) # EUROPÄISCHE PATENTSCHRIFT

(45) Veröffentlichungstag der Patentschrift:
**13.04.83**

(21) Anmeldenummer: **80102499.3**

(22) Anmeldetag: **07.05.80**

(51) Int. Cl.³: **G 02 F 1/133**

(54) **Flüssigkristall-Anzeigevorrichtung und Verfahren zu ihrer Herstellung.**

(30) Priorität: **15.05.79 DE 2919547**

(43) Veröffentlichungstag der Anmeldung:
**07.01.81 Patentblatt 81/1**

(45) Bekanntmachung des Hinweises auf die Patenterteilung:
**13.04.83 Patentblatt 83/15**

(84) Benannte Vertragsstaaten:
**CH FR GB IT LI NL**

(56) Entgegenhaltungen:
**DE-A-2 058 543**
**DE-A-2 123 828**
**DE-A-2 401 974**
**DE-A-2 820 667**
**US-A-3 938 242**

(73) Patentinhaber: **SIEMENS AKTIENGESELLSCHAFT,**
**Berlin und München Witteisbacherplatz 2,**
**D-8000 München 2 (DE)**

(72) Erfinder: **Kausche, Helmold, Dipl.-Phys.,**
**Tessinerstrasse 146, D-8000 München 71 (DE)**
Erfinder: **Peters, Winfried, Dipl.-Phys., Tizianstrasse 16,**
**D-8014 Neubiberg (DE)**
Erfinder: **Krüger, Hans, Dipl.-Phys., Peralohstrasse 13,**
**D-8000 München 83 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Flüssigkristall-Anzeigevorrichtung und Verfahren zu ihrer Herstellung

Die Erfindung betrifft eine Flüssigkristall-Anzeigevorrichtung gemäß dem Oberbegriff des Anspruchs 1. Ein solches Display wird in der DE-A-2 401 974 beschrieben.

Soll eine absorptive Flüssigkristallanzeige einen farbigen Bildhintergrund erhalten, so empfiehlt die zitierte Auslegeschrift folgendes Vorgehen: Man bedampft zunächst die Rückplatte mit einer metallischen, vorzugsweise aus Aluminium bestehenden Schicht, die anschließend anoxidiert und dann mit einem Farbstoff imprägniert wird. Danach bedeckt man die Schicht mit einem isolierenden Material und bildet auf dieser Isolatorschicht die ggf. segmentierte Rückelektrode. Schließlich wird die Trägerplatte noch mit einem elektrisch isolierenden, die Flüssigkristallmoleküle plattenparallel orientierenden Film überzogen.

Die geschilderte Beschichtungstechnik liefert zweifellos eine kontrastreiche, parallaxefreie Anzeige; sie bringt jedoch eine erhebliche Fertigungsbelastung mit sich, die vor allem dann, wenn das Flüssigkristalldisplay in großen Stückzahlen produziert werden soll, nicht mehr vertretbar ist.

Der Erfindung liegt daher die Aufgabe zugrunde, ein Display der eingangs genannten Art zu schaffen, das mindestens so gute Darstellungsqualitäten wie die zum Stand der Technik zählenden Ausführungen hat, dabei aber wesentlich einfacher hergestellt werden kann. Diese Aufgabe wird erfindungsgemäß durch eine Anzeigevorrichtung mit den Merkmalen des Patentanspruchs 1 gelöst.

Bei dem vorgeschlagenen Displaytyp dient die passivierte Al-Ta-Schicht zugleich als Elektrode, als farbiger Reflektor und als Orientierungsschicht. Durch diese Funktionszusammenlegung gestaltet sich die Plattenbeschichtung extrem einfach. Hinzu kommt, daß die Eigenschaften der Al-Ta-Schicht durch Wahl der Legierungszusammensetzung kontrolliert verändert und damit den Erfordernissen des Einzelfalles angepaßt werden können: Ist der Anteil von Aluminium bzw. Aluminiumoxid relativ groß, so hat die Schicht eine gute Leitfähigkeit bzw. ein ausgeprägteres Orientierungsvermögen. Bei hohem Tantaloxidanteil erhält man kräftigere Farben, deren Tönung überdies durch die Dickenbemessung der Oxidhaut gezielt variiert werden kann. Es hat sich gezeigt, daß der Oxidüberzug mit den gebräuchlichen Flüssigkristall-Gemischen praktisch nicht reagiert, so daß die Rückelektrode in all ihren Eigenschaften auch nach längerer Betriebsdauer unverändert bleibt.

Vorteilhafte Ausgestaltungen und Weiterbildungen des Lösungsvorschlags sind Gegenstand weiterer Ansprüche:

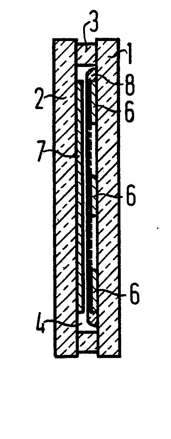

Die Erfindung soll nun anhand eines bevorzugten Ausführungsbeispiels, das in der Figur in einem schematischen Seitenschnitt dargestellt ist, näher erläutert werden.

Die Figur zeigt eine Flüssigkristallanzeige mit einer vorderen Trägerplatte 1, einer hinteren Trägerplatte 2 und einem Rahmen 3, der die beiden Substrate in einem bestimmten Abstand miteinander verbindet. In der vom Rahmen und den beiden Platten begrenzten Kammer befindet sich eine dielektrisch negativ anisotrope Flüssigkristallschicht 4. In den Flüssigkristall sind pleochroitische Farbstoff-Moleküle eingelagert, die die Eigenschaft haben, parallel zu ihrer Längsachse schwingendes Licht frequenzselektiv zu absorbieren und Licht mit einer Schwingungsebene senkrecht zur Molekül-Längsachse ungeschwächt hindurchzulassen. Die beiden Platten 1 und 2 sind außerdem auf ihren einander zugewandten Seiten jeweils mit elektrisch leitenden Belägen versehen (segmentierte Vorderelektrode 6, durchgehende Rückelektrode 7). Die Vorderplatte 1 trägt zusätzlich noch eine senkrecht orientierende Schicht 8.

Die Rückelektrode 7 kann folgendermaßen hergestellt werden: Zunächst wird die Rückplatte mit einer Aluminium-Tantal-Legierung bestäubt oder — unter Verwendung einer Elektronenstrahlkanone — bedampft. Dann oxidiert man die abgeschiedene Schicht anodisch oder thermisch, wobei die Dicke der entstehenden Oxidhaut so eingestellt wird, daß sich eine bestimmte Farbe ergibt. Die Zusammensetzung der Legierung hängt davon ab, welche Anforderungen an die Leitschicht gestellt werden. Normalerweise wird keiner der beiden Partner mit weniger als 10 Gew.-% vertreten sein; unter Umständen kann es sich aber auch empfehlen, einen geringeren Al- oder Ta-Anteil zu verwenden. So kommen durchaus auch aluminiumfreie Leitschichten in Frage, beispielsweise dann, wenn man vor allem auf die Farbkraft des Bildhintergrundes Wert legt.

Soll die Rückelektrode diffus reflektieren, so kommt man ohne zusätzliche Oberflächenbehandlungen aus, wenn man folgendermaßen verfährt: Die Schicht wird mit einer Dicke von mindestens 25 nm aufgesputtert oder aufgedampft, und zwar bei einer Substrattemperatur, deren Produkt mit der gewählten Schichtdicke größer ist als $2 \times 10^4$ nm $\cdot$ K. Die beiden Parameter sind im konkreten Fall jeweils so zu wählen, daß die aufwachsende Schicht Kristallite mit Abmessungen von der Größe der Lichtwellenlängen bilden kann. Nähere Einzelheiten hierzu sind der Europäischen Patentanmeldung Nr. 19 208 mit dem Titel »Passive elektrooptische Anzeigevorrichtung und Verfahren zur Herstellung einer solchen Vorrichtung« zu entnehmen.

**Patentansprüche**

1. Flüssigkristall-Anzeigevorrichtung mit einer Flüssigkristallschicht, die

a) einen pleochroitischen Farbstoff enthält,
b) bereichsweise zwischen einem transparenten und einem farbigen Zustand (Ruhezustand, angeregter Zustand) geschaltet werden kann und
c) im Ruhezustand homöotrop orientiert ist,

und mit zwei die Flüssigkristallschicht zwischen einander einschließenden Trägerplatten, die

d) auf ihren einander zugewandten Seiten elektrisch leitende Beläge tragen und von denen
e) die Rückplatte außerdem noch mit einem farbigen Reflektor versehen ist,

dadurch gekennzeichnet, daß

f) der elektrisch leitende Belag der Rückplatte (Rückelektrode), der zugleich auch als farbiger Reflektor dient, aus

$Al_xTa_{1-x}(0 \leq x < 1)$

besteht und
g) an seiner Oberfläche eine farbig reflektierende Oxidhaut hat.

2. Anzeigevorrichtung nach Anspruch 1, dadurch gekennzeichnet, daß gilt $x = 0$.

3. Anzeigevorrichtung nach den Ansprüchen 1 oder 2, dadurch gekennzeichnet, daß gilt $0,1 \leq x \leq 0,9$.

4. Verfahren zur Herstellung einer Anzeigevorrichtung gemäß einem der Ansprüche 1 bis 3, dadurch gekennzeichnet, daß die Rückelektrode aufgedampft oder aufgestäubt wird, und zwar mit einer Dicke von mindestens 25 nm und bei einer Substrattemperatur, deren Produkt mit der gewählten Schichtdicke den Wert $2 \times 10^4$ nm K übersteigt.

## Claims

1. A liquid crystal display device having a liquid crystal layer which

a) contains a pleochroic dye,
b) can be switched zone-wise between a transparent and a coloured state (rest state, excited state), and
c) is homeotropically orientated in the rest state; and two carrier plates which enclose the liquid crystal layer between them, and which
d) have electrically conductive coatings on their faces which are turned to one another, and of which
e) the rear plate is additionally provided with a coloured reflector,

characterised in that

f) the electrically conductive coating of the rear plate (rear electrode), which simultaneously serves as coloured reflector, consists of

$Al_xTa_{1-x}(0 \leq x < 1)$,

and
g) has on its surface a colour reflecting oxide film.

2. A display device as claimed in Claim 1, characterised in that $x = 0$.

3. A display device as claimed in Claim 1 or 2, characterised in that $0.1 \leq x \leq 0.9$.

4. A process for the production of a display device as claimed in one of Claims 1 to 3, characterised in that the rear electrode is vapour-deposited or sputtered with a thickness of at least 25 nm and at a substrate temperature whose with the selected layer thickness exceeds the value $2 \times 10^4$ nm K.

## Revendications

1. Dispositif d'affichage à cristaux liquides comportant une couche de cristaux liquides qui

a) contient un colorant pléochrïque,
b) peut être commutée, par zones, entre un état transparent et un état coloré (état de repos, état excité), et
c) est orientée de façon homéotrope dans l'état de repos, et comportant deux plaques supports, enfermant entre elles la couche de cristaux liquides, qui
d) portent des revêtements conducteurs du point de vue électrique sur leurs faces tournées l'une vers l'autre, et dont
e) la plaque arrière est en outre munie encore d'un réflecteur coloré,

caractérisé par le fait que

f) le revêtement conducteur du point de vue électrique de la plaque arrière (électrode arrière), qui sert simultanément également de réflecteur coloré, est constitué par du

$Al_xTa_{1-x}(0 \leq x < 1)$,

et
g) comporte sur sa surface une pellicule d'oxyde réfléchissant de façon colorée.

2. Dispositif d'affichage suivant la revendication 1, caractérisé par le fait que $x = 0$.

3. Dispositif d'affichage suivant les revendications 1 ou 2, caractérisé par le fait que $0,1 \leq x \leq 0,9$.

4. Procédé pour fabriquer un dispositif d'affichage suivant l'une des revendications 1 à 3, caractérisé par le fait que l'électrode arrière est recouverte par évaporation ou par pulvérisation, et ce avec une épaisseur d'au moins 25 nm et à une température du substrat dont le produit par l'épaisseur de couche choisie est supérieur à la valeur $2 \times 10^4$ nm.